# EUROPEAN PATENT SPECIFICATION

(11) **EP 4 458 598 B1**
(45) Date of publication and mention of the grant of the patent: **10.09.2025**
(21) Application number: 24173351.8
(22) Date of filing: 30.04.2024
(51) Int. Cl.: B60K 17/10, A01B 33/02, A01D 69/03, B60K 17/28, B62D 51/06, F16H 57/04

(54) **SINGLE-AXLE AGRICULTURAL MACHINE WITH CONTINUOUS SPEED VARIATION AND INDEPENDENT POWER TAKE-OFF**
EINACHSIGE LANDWIRTSCHAFTLICHE MASCHINE MIT KONTINUIERLICHER GESCHWINDIGKEITSÄNDERUNG UND UNABHÄNGIGER ZAPFWELLE
MACHINE AGRICOLE À ESSIEU UNIQUE À VARIATION CONTINUE DE VITESSE ET PRISE DE FORCE INDÉPENDANTE

(30) Priority: 04.05.2023 IT 202300008787
(43) Date of publication of application: 06.11.2024
(73) Proprietor: BCS S.p.A., 20123 Milano (IT)
(72) Inventor: OMODEO VANONE, FABRIZIO, I-27036 MORTARA (PV) (IT)
(74) Representative: Dragotti & Associati S.R.L.

(56) References cited:
- EP-A1- 2 548 788
- CH-A5- 607 699
- CH-A5- 688 857
- US-A1- 2003 234 133

## Description

The present invention refers to a single-axle agricultural machine with continuous speed variation and independent power take-off.

It is known to the experts in the sector that the field of the single-axle agricultural machines, driven by an operator standing on the ground, include motor cultivators or motor mowers. Such motor cultivators or motor mowers generally comprise a load-bearing frame on which an internal combustion engine with limited power (e.g. up to 15 kW - 20 HP) is installed. This engine, with interposition of a transmission assembly or gearbox provided with a clutch and coupled to the single axle, is used to drive both a pair of wheels for the movement of the agricultural machine and a power or power take-off, which is also called "PTO".

In fact, both rear tools, such as, for example, "cutters" for hoeing the soil, and front tools such as, for example, mowing bars for cutting grass, are normally connected to the aforementioned power or power take-off.

An operator standing on the ground controls such an agricultural machine and follows its movement by driving it by means of a handlebar (also called handles). This handlebar carries the controls for driving the agricultural machine (gas, brake, clutch, gearbox, drives of the work tools, etc.) arranged in an appropriate manner.

As mentioned above, in particular, the agricultural machine can have a configuration as a motor cultivator. In this configuration, the agricultural machine provides that a rear tool, called cutter for hoeing the soil, is connected to the power take-off (PTO).

This tool is facing the user who, in front of him/her, therefore has in succession: the cutter, the handles, the gearbox, the wheel axle and the engine.

In a second configuration, the single-axis agricultural machine of this type provides that the handles are positioned on the engine side. The tool is facing forward and therefore the user has, in front of him/her, in succession: the handles, the engine, the gearbox, the wheel axle and the tool. This machine configuration is suitable for the use of front tools, such as for example mowing bars, lawn mowers or mulchers and it is precisely in this configuration that the machine is called a "motor mower".

Sometimes it is possible, on the same single-axis agricultural machine, to rotate the handles, and the machine can be used both with the cutter and with front tools and, in this case, this is a "reversible" single-axis agricultural machine.

As mentioned above, most of these single-axis agricultural machines are provided with endothermic engines with limited power (about 15 kW - 20 HP). The transmission of the motion from the engine to the wheels and the possibility of varying the movement speed or of reversing the direction of travel are incorporated in the gearbox provided on them.

In the most common single-axis agricultural machines, a mechanical transmission with mechanical gearbox or in any case a mechanical belt gearbox is used.

The mechanical gear transmission allows to obtain the best cost-benefit ratio compared to the belt transmission being more reliable and long-lasting.

These single-axis agricultural machines have non-exorbitant costs and are accessible to various users.

Moreover, there are also machines with significantly higher costs that have a hydrostatic transmission.

The use of a hydrostatic transmission for agricultural machines with limited power essentially presents two types of problems: costs and dissipation of power in heat.

Moreover, in the machines with hydrostatic transmission it is possible to vary the advancement speed continuously, leaving the number of revolutions of the endothermic engine unchanged. This provides a virtually infinite range of speeds.

When there is a hydrostatic transmission to drive both the tool and the movement of the agricultural machine, it is necessary to use expensive and delicate components of the related system, such as valves, distributors, solenoid valves, connections that are in some ways even delicate, etc.

This part of the machine causes costs to rise disproportionately, which leads it to be, as a whole, inaccessible to a large customer base.

The dissipation of power in heat is another relevant aspect that can cause some problems when both tools and the traction of the wheels are in operation.

In fact, only a minimum fraction of power is used to move the machine, while the greatest use of power is for driving the work tools.

It must therefore be taken into account that in the case of the use of hydrostatic transmission, the containment of the heating deriving from the hydrostatic component involves in the known machines the use of special and costly expedients, such as for example large diameter fans, circuits and heat exchangers, which are expensive and which in any case constitute additional members.

The arrangements hitherto known in single-axis agricultural machines provide for a structure with a significant number of mechanical components of the transmission with relative encumbrances and problems of general type.

Document CH688857 A concerns a self-propelled and steering operating machine, with a hydrostatically driven drive axle and a front connection device for attaching work equipment.

In this machine the hydrostatic pump is housed in the gearbox housing/differential while the hydrostatic motor is separated, placed externally and joined with a high-pressure hose.

The hydrostatic pump has an axis parallel to that of the thermal engine and the arrangement of various axles is not described.

Document EP2548788 refers to a previous single-axis agricultural machine comprising an internal combustion engine, a clutch assembly and a gearbox, a pair of wheels and a power take-off for work tools, as well as a steering handlebar provided with controls by the same applicant.

It is therefore a general object of the present invention to overcome the drawbacks of the known technique described above.

In particular, an object of the present invention is to realise a single-axis agricultural machine capable of moving within a virtually infinite range of speeds that are seamlessly selectable within functional limits. At the same time, such a machine must be able to guarantee optimal operation and efficiency of the mounted and operating work tools, driven by a mechanical power take-off whose speed is independent of that of the advancement of the machine.

Another object of the present invention is to contain the heating deriving from the hydrostatic component without using the particular and expensive precautions previously mentioned, such as bulky fans, circuits, heat exchangers, etc.

Another object of the present general invention is therefore to realize, at low cost, a single-axis agricultural machine with continuous speed variation and independent power take-off with high reliability.

The above objects are achieved by a single-axis agricultural machine with continuous speed variation and independent power take-off made according to independent claim 1 and the sub-claims that follow.

A single-axis agricultural machine according to the invention allows heat dissipation to be achieved also thanks to the particular shape of the housing which also serves as an oil tank. In a single-axis agricultural machine with continuous speed variation and independent power take-off with high reliability according to the invention, an arrangement and structure are realized that minimizes the number of mechanical components of the transmission by adopting an innovative scheme.

This innovative scheme is achieved in that the main PTO shafts, wheel axle and hydrostatic assembly with reducer are arranged according to the three orthogonal axes of a three-dimensional Cartesian system.

The structural and functional characteristics of the present invention and its advantages over the known art will be even clearer and more evident from an examination of the following description, referred to the attached schematic drawings, which show an example of implementation of the invention itself. In the drawings:
- figures 1a and 1b represent, in respective totally schematic side and top plan views, a first embodiment of the agricultural machine according to the present invention in a schematic motor cultivator configuration;
- figures 2a and 2b represent, in respective side and top plan views, a second embodiment of the agricultural machine according to the present invention in a schematic motor mower configuration;
- figure 3 is a perspective view of the gearbox assembly of the agricultural machine of the invention;
- figure 4 is a perspective view of a detail of the gearbox assembly of figure 3 in the part facing the tool, i.e. a view rotated 180° with respect to that of figure 3;
- figure 5 is a further perspective view illustrating, on an enlarged and partially split scale, a mounted detail of the particular cooling fan shown instead exploded in figure 3;
- figure 6 is a vertical section in longitudinal elevation of the gearbox assembly of the machine according to the invention, in the perspective position already shown in figure 3.
- figure 7 is a perspective view of the internal shafts as they are mounted in the transmission and in which figure the three orthogonal directions that characterise the arrangement are highlighted, in which the gearbox housing and accessories have been removed for greater clarity;

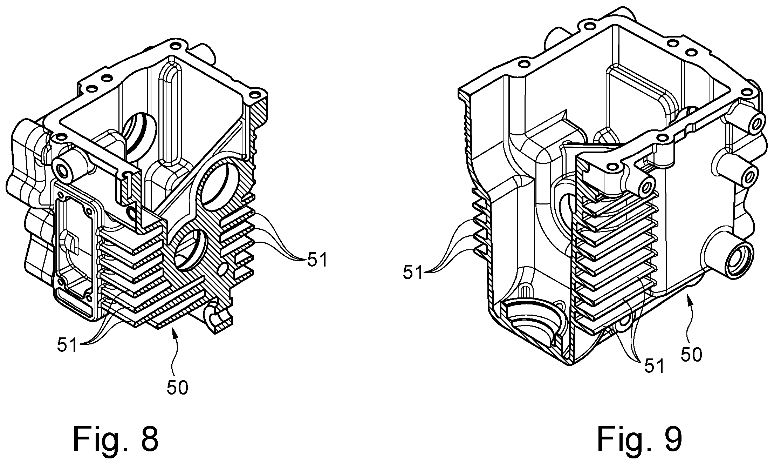

- figures 8 and 9 show two partially sectioned and split perspective views of the gearbox housing of the machine according to the present invention.
- figure 10 shows a partially sectioned perspective view of the hydrostatic assembly at the pump and the pin that controls it, control connected to the handles;
- figures 11a and 11b are vertical sections in longitudinal elevation of the gearbox assembly of the machine according to the invention at the mechanism for the idling manoeuvring, the gearbox housing and some accessories have been removed for greater clarity.

For the illustration of the drawings, use is made in the following description of identical numerals to indicate construction elements with the same function. Further, for illustration clarity, some numerical references may not be repeated in all the figures.

Indications such as "vertical" and "horizontal", "upper" and "lower" (in the absence of other indications) are to be read with reference to the assembly (or operating) conditions and with reference to the normal terminology used in current language, where "vertical" indicates a substantially parallel direction to that of the gravitational force vector "g" and horizontal to a direction perpendicular thereto.

With reference to the exemplary and non-limiting figures, an embodiment of a single-axis agricultural machine with continuous speed variation and independent power take-off is shown.

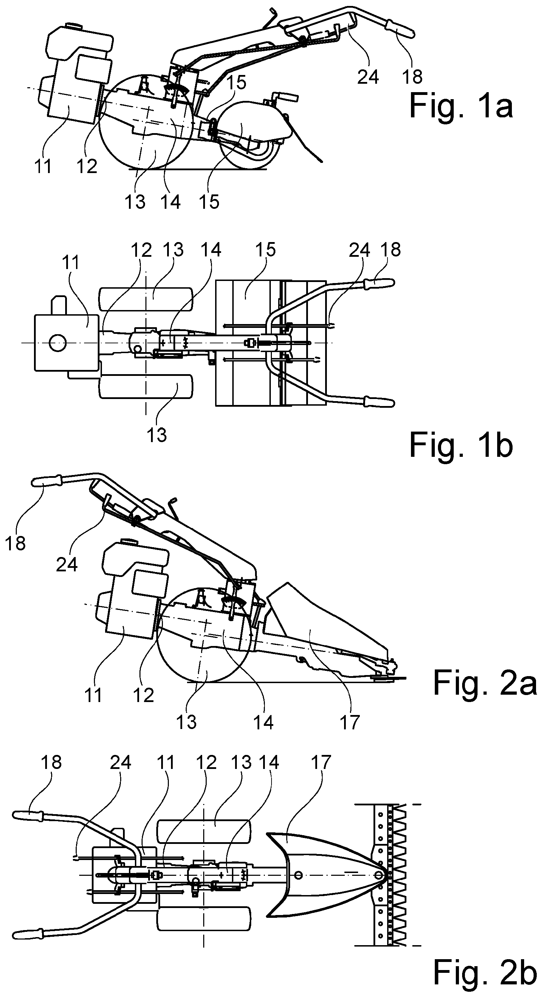

With specific reference to figures 1a, 1b and 2a, 2b, two single-axis agricultural machines with continuous speed variation and independent power take-off according to the invention are shown in schematic views, the first in a motor cultivator configuration and the second in a motor mower configuration.

In both cases, this single-axis agricultural machine is suitable for use by an operator standing on the ground.

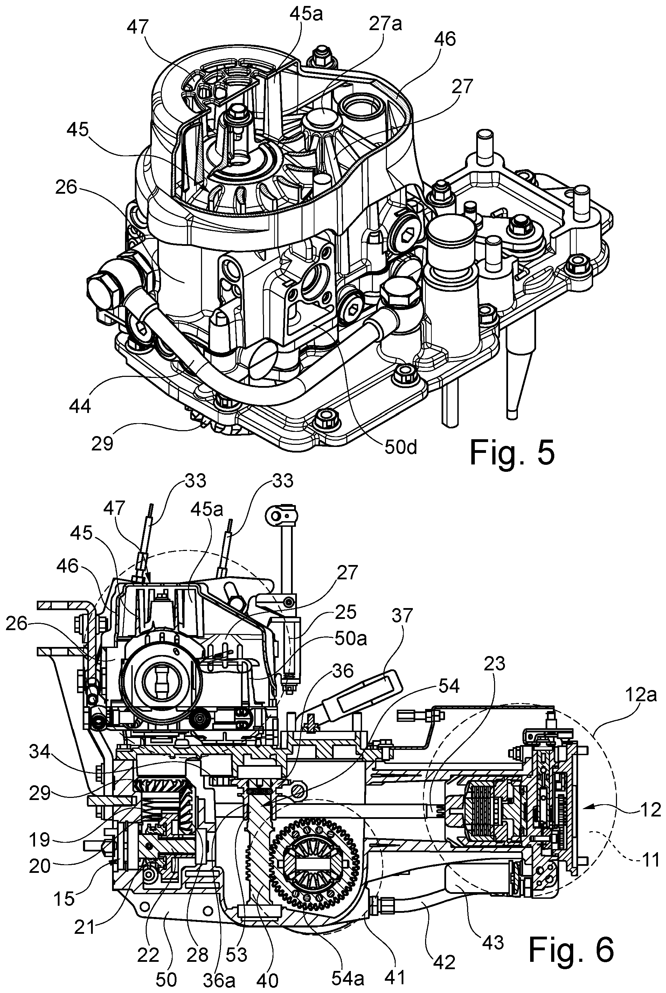

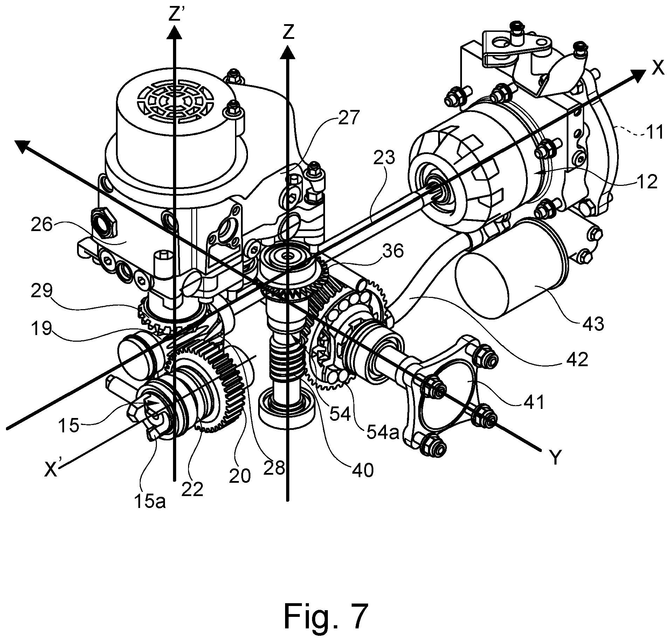

The machine comprises a series of main parts in sequence. Firstly, there is provided an internal combustion engine 11, with limited power (approximately up to 15 kW - 20 HP) (shown only in its attachment flange and indicated with a dotted line in figures 6, 7), a clutch assembly 12 and a gearbox 14. Two wheels 13 and a power take-off 15 for a generic work tool, such as for example a cutter 16 or a mowing bar 17, in addition to a motorcycle-type guiding handlebar 18, called "handles", equipped with controls 24 follow. The two wheels 13 and the power take-off 15 are controlled by the gearbox 14. In particular, a primary shaft 23 of the internal combustion engine 11 and a shaft of the power take-off 22 are arranged according to two axes X and X' arranged parallel to each other. An axis 41 of the wheels 13, arranged according to the direction Y, is perpendicular to the axes X of the internal combustion engine 11 and X' of the shaft of the power take-off 22.

The clutch assembly, for example, consists of a multiple disc clutch in an oil bath, as best shown by the circle 12a in figure 6. A typical example of this assembly is described in patent EP2100491B1 of the same Applicant.

This clutch assembly 12 cooperates in cascade with a primary shaft 23, a reduction gear 19 and 20 and a coupling 21 to transmit motion to a shaft 22 of the power take-off 15 to which any tool (for example the cutter 16 or the mowing bar 17 or other tool) is attached.

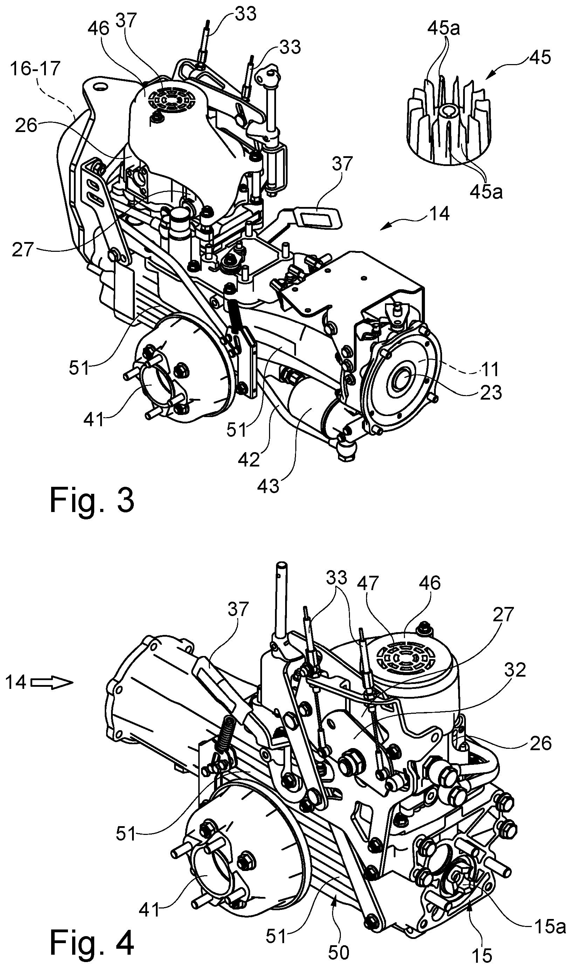

The particular shape of a three-toothed coupling 15a of the power take-off 15 (better visible in fig. 4) makes it easy the coupling during tool replacement operations and ensures reliable power transmission. A typical example of this assembly is described in patent EP2374649B1 of the same Applicant.

The transmission of the power to the tool, being completely mechanical with gears and supports in an oil bath, ensures very high performance with minimal power losses. This is because the shafts that provide power to the mentioned tools are completely separated from the hydrostatic mechanism and their rotation speed is independent of the speed of the translation motion of the machine.

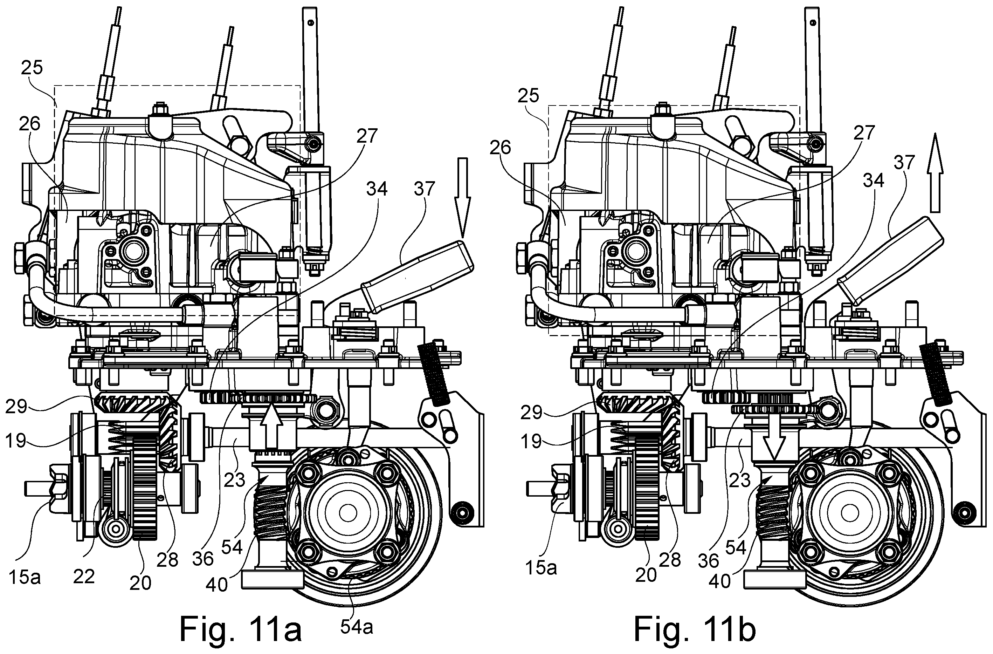

According to the present invention, the agricultural machine provides in the gearbox 14 a hydrostatic assembly, identified overall with the circle 25 of figures 6, 11a and 11b, for the control and the transmission of the motion to the wheels 13. A so-called "compact" system is used for this assembly. It essentially comprises a hydrostatic pump 26 and a hydrostatic motor 27, at least one of which has a variable displacement, which are arranged in a single compact unit enclosed within a single housing consisting of a housing 50a in Figs. 5 and 6 obtained by melting. The hydrostatic assembly is connected to the primary shaft 23 from which the hydrostatic pump 26 is driven using only a pair of concurrent bevel gears 28, 29 and preferably, but not exclusively, with helical toothing. In fact, common straight gears, which are quite noisy, can also be used. A first kinematic chain is thus created that connects the hydrostatic assembly 25 to the primary shaft 23 so that the axis of the hydrostatic pump 26 arranged according to the direction Z is perpendicular to the axis X of the primary shaft 23.

In fact, the primary shaft 23 carries a first bevel gear 28 keyed which in turn controls a second bevel gear 29 which drives the hydrostatic pump 26 with a suitable ratio in order to obtain the right rotation rate, i.e. with a minimum reduction ratio.

A control unit 32 is connected to a remote control system for driving the hydrostatic motor 27, in the example highlighted by means of Bowden cables 33, wherein other solutions can also be used such as tie rods, actuators, servo mechanisms, etc.

By driving the hydrostatic pump 26 by means of the endothermic engine 11 and by varying the displacement by means of, for example, the control unit 32 with Bowden cables 33, the variation in speed and direction of the machine is obtained.

The rotation of the hydrostatic motor 27, or rather of its shaft indicated with 27a in fig. 5, transmits the rotation motion to the gearbox through a second kinematic chain that will be seen below.

The rotation of the hydrostatic motor 27 in fact drags in rotation a further gear 34 coaxial to the shaft of the hydrostatic motor 27.

This further gear 34 causes the rotation of a gear 36, meshed to it, which brings the rotation motion within the gearbox 14. These gears 34, 36 realise the second kinematic chain.

In fact, it should be noted that the gear 36 is slidable, can be driven from the outside by means of a special lever 37 and allows the wheels 13 to be disconnected from the transmission if the thrust manoeuvre, with the endothermic engine off, were necessary. Fig. 11a shows the position of the lever 37 and of the gear 36 when the hydrostatic assembly is connected to the wheels, fig. 11b shows the same elements in the idle position.

The gear 36 engages in fact by means of toothings 53 obtained on a hollow extension 36a thereof on complementary toothings of a shaft 54 in turn provided with a gear section 40. The downward sliding of this gear allows the disengagement or uncoupling of the toothings 36 and 34 coupled to each other.

This gear section 40 serves as a transmission and controls an external control toothing 54a for an axis of the wheels 13, indicated as a whole with the circle 41 of figure 6. This axle 41 of the wheels 13 can be variously conformed, for example with a lockable central differential or steering assemblies with independent clutches and brakes or still reducers added before the wheels.

The hydrostatic assembly uses the same oil as the hydraulic fluid that lubricates the gearbox.

The oil is sucked by means of a pipe 42 through a filter 43 located at the farthest point from the casing assembly of the transmission.

The oil is then discharged from the hydrostatic assembly via a pipe 44 to the opposite end of the hydrostatic assembly. This arrangement results in a long path that the oil must travel between suction and discharge. This long path substantially favours the decrease in temperature.

The use of the hydrostatic assembly solely for the movement of the agricultural machine results in modest heat generation compared to the known agricultural machines that are completely hydrostatically controlled both for the operation of the tools and for movement.

Moreover, in a machine according to the present invention, even in the presence of minimal amounts of power dissipation by heat, this is mainly caused by the hydrostatic assembly.

According to the invention, in order to further reduce this dissipation, it was thought to add to the arrangement a particular cooling assembly associated with the hydrostatic assembly.

In fact, the use of a fan 45 is provided which is enclosed by a bell casing 46, arranged above the fan 45 such that it directs the air flow to lap the entire hydrostatic assembly, creating a system with very small dimensions.

The fan 45 has a general encumbrance in the shape of a cylinder in which the side surface is formed by radial fins 45a fixed to a circular base. The fins 45a are arranged like a palisade, extend upwards from the base and are joined only to said lower base which is keyed on a drive shaft.

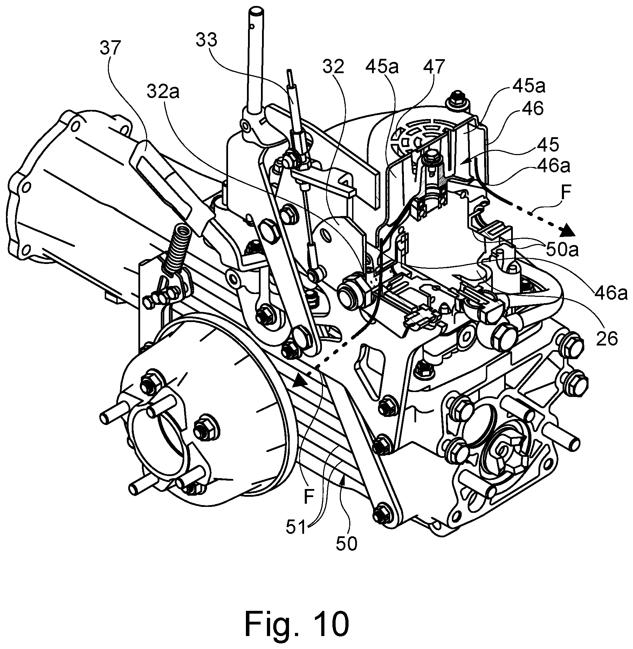

The fins 45a are arranged like a palisade and are fixed to the circular base with free terminal ends, so that the air can enter inside the fan easily and widely (see figure 10).

In this way, in the upper part the fan remains completely open to allow the suction of air that will be centrifuged outside. The casing 46 is shaped to follow as a fairing the external shape of the fan 45 so as to guide the cooling air flow downwards in figure 10 according to the arrows indicated with F.

Fresh air is sucked from central holes 47 in the upper surface of the casing, through which air enters which, centrifuged radially, is directed to travel internally the casing 46 in its outline and is discharged outside through a peripheral opening indicated with 46a in fig. 10. A system is thus obtained in which air at ambient temperature is forced to pass quickly between the wall of the hydrostatic assembly and the casing 46 increasing the heat removal capacity. In the known solutions, this function is entrusted to larger-sized fans generating a free air flow with a less effective cooling effect.

Another expedient to contain the heating of the oil is given by the particular shape of the housing 50 which has a series of deep finnings 51 on both sides. The finnings 51 contribute to the structural strength of the transmission housing, but above all they increase the surface in contact with the cooler ambient air, thus favouring heat disposal.

This allows, unlike known machines, to drastically reduce the dissipation of power due to heat because it limits the temperature of the oil while maintaining its viscosity within the optimal limits for the correct performance of the hydrostatic assembly.

A solution such as the one presented here proposes a single-axis agricultural machine with continuous speed variation and independent power take-off that optimises operation by reducing its costs.

Even in the presence of a hydrostatic assembly in this agricultural machine, there is almost total absence of expensive components of the hydraulic system remaining the actuation of the power take-off made through a traditional mechanical transmission.

By keeping the control of the power take-off made through mechanical transmission and endothermic engine, the advantages deriving from its known reliability have been preserved.

The hydrostatic component couples on this base, the use of which is thus less invasive both from a technical and economic point of view.

In contrast to the solutions known in this power range, in which cooling is generally entrusted to a simple free axial flow fan, the provision of a centrifugal fan with tangential fins 45a and faired casing with large and numerous finnings improves cooling with a forced air flow.

Advantageously, moreover, the shape of the transmission housing rich in fins 45a increases its heat exchange with the atmospheric air.

By limiting the use of the hydrostatic technology to traction alone, the power losses typical of the hydrostatic assemblies are thus minimised, while having non-negligible advantages.

A further and innovative feature with respect to the prior art is now described.

According to the invention, an arrangement of the shafts inside the gearbox assembly and transmission and parallel to the three orthogonal axes of a Cartesian space is made. This arrangement allows the following advantages to be achieved:
- the mechanical control shafts of the power take-off (for example the primary shaft 23) arranged according to a direction axis X in Fig. 7. A long shaft allows to overcome the distance between the endothermic engine and the tool, transmitting power reliably, economically and with high efficiency. By means of a pair of gears and a compact shaft 22, which are equally arranged according to a direction axis X, the correct rotation rate for the PTO is obtained.
- the wheel axle 41 arranged according to a direction Y in Fig. 7 allows the machine to move forward and backward as well as allowing various accessory components such as for example differential and brakes to be housed;
- the shafts (for example the shaft 54 connected in output from the hydrostatic motor 27 and the shaft integral with the bevel gear 29) that move the hydrostatic assembly and that are driven by it are arranged according to axes of directions Z and Z' that are parallel to each other in Fig. 7.

The hydrostatic assembly is thus optimally positioned near the centre of gravity of the machine, away from heat sources and exposed to air, in a raised position for easy maintenance or replacement and with a favourable path of the control cables. The forced air cooling fan is located above it where it sucks cooler and cleaner air from the contaminants typical of the agricultural use such as plant residues and those deriving from the soil.

Advantageously, therefore, it is worth reiterating that both the cooling system and the arrangement of the shafts are made possible by the adoption of a compact hydrostatic assembly enclosed within a single monolithic casing 50a. In this way, according to the present invention, a single-axis agricultural machine with continuous speed variation and independent power take-off with high reliability has been created which has an arrangement and structure that minimizes the number of the mechanical components of the transmission by adopting an innovative scheme.

This innovative scheme is achieved in that, as already mentioned, the main PTO shafts, wheel axle and hydrostatic assembly with reducer are arranged according to the three orthogonal axes of a three-dimensional Cartesian system.

The purpose mentioned in the preamble of the description is thus achieved.

The scope of protection of the present invention is defined by the appended claims.

## Claims

1. Single-axle agricultural machine with continuous speed variation and independent power take-off comprising an internal combustion engine (11), with limited power, a clutch assembly (12) and a gearbox (14), wheels (13) and a power take-off (15) for work tools (16, 17), in addition to a guide handlebar (18) provided with controls (24), said wheels (13) and said power take-off (15) being controlled by said gearbox (14), wherein
from said clutch assembly (12) a primary shaft (23) comes out for controlling a gear reduction (19, 20) at the output of which reduction there is provided a coupling (21) to transmit the motion to a shaft (22) of the power take-off (15),
the machine also provides a hydrostatic assembly (25) which essentially comprises a hydrostatic pump (26) and a hydrostatic motor (27) and which draws motion directly from said internal combustion engine (11) through said clutch assembly (12) and a first kinematic chain,
said hydrostatic assembly in turn is connected to a second kinematic chain (34, 36) that returns to the gearbox (14) and through its final transmission gear (40) controls an axle (41) of the wheels (13),
said machine providing three assemblies of shafts for the transmission of motion respectively: from the endothermic engine (11) towards the power take-off (15), from the endothermic engine (11) towards the hydrostatic pump (26) and from the hydrostatic motor (27) towards the final reduction (40), from the final reduction (40) towards the wheel axle (41) and the wheels themselves (13), wherein said assemblies of shafts are arranged on axes orthogonal to each other according to the main directions (X, Y, Z) of a three-dimensional Euclidean space,
wherein said primary shaft (23) of the internal combustion engine (11) and said shaft of the power take-off (22) are arranged according to two axes (X and X') arranged parallel to each other, while an axis (41) of the wheels (13) is arranged according to a direction Y that is perpendicular to said axes (X, X') of the internal combustion engine (11) and of the shaft of the power take-off (22); and said axis of the hydrostatic pump (26) is arranged according to a direction (Z') perpendicular to the axis (X) of the primary shaft (23) and a shaft (54) in output from the hydrostatic motor (27) is arranged according to a direction (Z') that is parallel to the axis (Z) of the hydrostatic pump (26) and is perpendicular to the axis (X) of the primary shaft (23).

2. Agricultural machine according to claim 1, **characterized in that** in said hydrostatic assembly (25) at least one of said hydrostatic pump (26) and hydrostatic motor (27) is with variable displacement, and said hydrostatic pump (26) and hydrostatic motor (27) are arranged in a single compact unit, said hydrostatic assembly being connected to said primary shaft (23) of the gearbox (14).

3. Agricultural machine according to claim 1 or 2, **characterized in that** said hydrostatic pump (26) and hydrostatic motor (27) of said hydrostatic assembly (25) are arranged in a monolithic casing (50a).

4. Agricultural machine according to one of claims 1, 2 or 3, **characterized in that** said hydrostatic assembly (25) is connected to said primary shaft (23) of the gearbox (14) by means of said first kinematic chain which comprises a first bevel gear (28) keyed on said primary shaft (23) which in turn controls a second bevel gear (29) which drives the hydrostatic pump (26).

5. Agricultural machine according to claim 1, **characterized in that** said second kinematic chain comprises a further third gear (34) coaxial to the shaft of the hydrostatic motor (27) which in turn causes the rotation of a fourth gear (36) which returns the rotation motion within the gearbox (14).

6. Agricultural machine according to one of the preceding claims from 1 to 5, **characterized in that** it comprises a housing (50) of the gearbox or transmission provided with finnings (31) to favour thermal dispersion.

7. Agricultural machine according to one of the preceding claims from 1 to 6, **characterized in that** it further comprises a cooling assembly (45, 46, 47) associated with the hydrostatic assembly.

8. Agricultural machine according to claim 7, **characterized in that** said cooling assembly comprises a fan (45) enclosed by a bell casing (46), arranged above the fan (45) such that it directs the air flow to lap the entire hydrostatic assembly.

9. Agricultural machine according to claim 8, **characterized in that** said centrifugal fan (45) has a general overall encumbrance in the shape of a cylinder in which the lateral surface of the cylinder is formed by radial fins fixed to a circular base, where said fins are arranged as a palisade, extend upwards from the base and are connected only to said lower base which is keyed on a drive shaft.

10. Agricultural machine according to claim 8 or 9, **characterized in that** said casing (46) provides central holes (47) in the upper surface of the casing, through which air enters which, centrifuged radially, is directed to travel internally along the casing (46) in its outline and is discharged outside through a peripheral opening (46a).

## Patentansprüche

1. Einachsige landwirtschaftliche Maschine mit stufenloser Geschwindigkeitsregelung und unabhängiger Leistungsabnahme, umfassend einen Verbrennungsmotor (11) mit begrenzter Leistung, eine Kupplungsbaugruppe (12) und ein Getriebe (14), Räder (13) und eine Leistungsabnahme (15) für Arbeitswerkzeuge (16, 17) sowie einen mit Steuerungen (24) versehenen Führungslenker (18), wobei die Räder (13) und die Leistungsabnahme (15) durch das Getriebe (14) gesteuert werden, wobei
von der Kupplungsbaugruppe (12) eine primäre Welle (23) zur Steuerung einer Getriebeuntersetzung (19, 20) ausgeht, an deren Ausgang eine Kupplung (21) zur Übertragung der Bewegung auf eine Welle (22) der Leistungsabnahme (15) bereitgestellt ist,
die Maschine auch eine hydrostatische Baugruppe (25) bereitstellt, die im Wesentlichen eine hydrostatische Pumpe (26) und einen hydrostatischen Motor (27) umfasst und die Bewegung direkt von dem Verbrennungsmotor (11) über die Kupplungsbaugruppe (12) und eine erste kinematische Kette bezieht,
die hydrostatische Baugruppe ihrerseits mit einer zweiten kinematischen Kette (34, 36) verbunden ist, die zum Getriebe (14) zurückkehrt und über ihr Endübertragungsgetriebe (40) eine Achse (41) der Räder (13) steuert,
wobei die Maschine drei Wellenbaugruppen für die Übertragung der Bewegung bereitstellt: vom endothermen Motor (11) zur Leistungsabnahme (15), vom endothermen Motor (11) zur hydrostatischen Pumpe (26) und vom hydrostatischen Motor (27) zur Enduntersetzung (40), von der Enduntersetzung (40) zur Radachse (41) und zu den Rädern selbst (13), wobei diese Wellenbaugruppen auf zueinander orthogonalen Achsen nach den Hauptrichtungen (X, Y, Z) eines dreidimensionalen euklidischen Raums angeordnet sind,
wobei die primäre Welle (23) des Verbrennungsmotors (11) und die Welle der Leistungsabnahme (22) nach zwei parallel zueinander angeordneten Achsen (X und X') angeordnet sind, während eine Achse (41) der Räder (13) nach einer Richtung Y angeordnet ist, die senkrecht zu den Achsen (X, X') des Verbrennungsmotors (11) und der Welle der Leistungsabnahme (22) verläuft; und die Achse der hydrostatischen Pumpe (26) in einer Richtung (Z') senkrecht zur Achse (X) der primären Welle (23) angeordnet ist und eine Welle (54) am Ausgang des hydrostatischen Motors (27) in einer Richtung (Z') angeordnet ist, die parallel zur Achse (Z) der hydrostatischen Pumpe (26) und senkrecht zur Achse (X) der primären Welle (23) ist.

2. Landwirtschaftliche Maschine nach Anspruch 1, **dadurch gekennzeichnet, dass** in der hydrostatischen Baugruppe (25) mindestens eine der hydrostatischen Pumpe (26) und des hydrostatischen Motors (27) mit variabler Verdrängung ist, und die hydrostatische Pumpe (26) und der hydrostatische Motor (27) in einer einzigen kompakten Einheit angeordnet sind, wobei die hydrostatische Baugruppe mit der primären Welle (23) des Getriebes (14) verbunden ist.

3. Landwirtschaftliche Maschine nach Anspruch 1 oder 2, **dadurch gekennzeichnet, dass** die hydrostatische Pumpe (26) und der hydrostatische Motor (27) der hydrostatischen Baugruppe (25) in einem monolithischen Gehäuse (50a) angeordnet sind.

4. Landwirtschaftliche Maschine nach einem der Ansprüche 1, 2 oder 3, **dadurch gekennzeichnet, dass** die hydrostatische Baugruppe (25) mit der primären Welle (23) des Getriebes (14) mittels der ersten kinematischen Kette verbunden ist, die ein erstes Winkelgetriebe (28) umfasst, das auf der primären Welle (23) verkeilt ist und seinerseits ein zweites Winkelgetriebe (29) steuert, das die hydrostatische Pumpe (26) antreibt.

5. Landwirtschaftliche Maschine nach Anspruch 1, **dadurch gekennzeichnet, dass** die zweite kinematische Kette ein weiteres drittes Getriebe (34) umfasst, das koaxial zur Welle des hydrostatischen Motors (27) angeordnet ist und seinerseits die Drehung eines vierten Getriebes (36) bewirkt, das die Drehbewegung innerhalb des Getriebes (14) zurückführt.

6. Landwirtschaftliche Maschine nach einem der vorstehenden Ansprüche 1 bis 5, **dadurch gekennzeichnet, dass** sie ein Gehäuse (50) des Getriebes oder der Übertragung umfasst, das mit Rippen (31) versehen ist, um die Wärmedispersion zu begünstigen.

7. Landwirtschaftliche Maschine nach einem der vorstehenden Ansprüche 1 bis 6, **dadurch gekennzeichnet, dass** sie ferner eine Kühlbaugruppe (45, 46, 47) umfasst, die mit der hydrostatischen Baugruppe verbunden ist.

8. Landwirtschaftliche Maschine nach Anspruch 7, **dadurch gekennzeichnet, dass** die Kühlbaugruppe einen Lüfter (45) umfasst, der von einem Glockengehäuse (46) umschlossen ist, das oberhalb des Lüfters (45) so angeordnet ist, dass es den Luftstrom so lenkt, dass er die gesamte hydrostatische Baugruppe überstreicht.

9. Landwirtschaftliche Maschine nach Anspruch 8, **dadurch gekennzeichnet, dass** der Lüfter (45) eine allgemeine Gesamtbelastung in Form eines Zylinders aufweist, bei dem die seitliche Oberfläche des Zylinders durch radiale Rippen gebildet wird, die an einer kreisförmigen Basis befestigt sind, wobei die Rippen als Palisade angeordnet sind, sich von der Basis nach oben erstrecken und nur mit der unteren Basis verbunden sind, die auf einer Antriebswelle verkeilt ist.

10. Landwirtschaftliche Maschine nach Anspruch 8 oder 9, **dadurch gekennzeichnet, dass** das Gehäuse (46) zentrale Löcher (47) in der oberen Oberfläche des Gehäuses bereitstellt, durch die Luft eintritt, die, radial zentrifugiert, so gelenkt wird, dass sie sich innen entlang des Gehäuses (46) in dessen Umriss bewegt und außen durch eine Umfangsöffnung (46a) abgelassen wird.

## Revendications

1. Machine agricole à essieu unique avec variation continue de la vitesse et prise de force indépendante comprenant un moteur à combustion interne (11), avec une puissance limitée, un ensemble embrayage (12) et une boîte de vitesses (14), des roues (13) et une prise de force (15) pour des outils de travail (16, 17), en plus d'un guidon (18) pourvu de commandes (24), lesdites roues (13) et ladite prise de force (15) étant commandées par ladite boîte de vitesses (14), dans laquelle
à partir dudit ensemble embrayage (12) sort un arbre primaire (23) pour commander un réducteur (19, 20) à la sortie de cette réduction est prévu un accouplement (21) pour transmettre le mouvement à un arbre (22) de la prise de force (15),
la machine fournit également un ensemble hydrostatique (25) qui comprend essentiellement une pompe hydrostatique (26) et un moteur hydrostatique (27) et qui tire le mouvement directement dudit moteur à combustion interne (11) par l'intermédiaire dudit ensemble embrayage (12) et d'une première chaîne cinématique,
ledit ensemble hydrostatique est à son tour relié à une deuxième chaîne cinématique (34, 36) qui retourne à la boîte de vitesses (14) et qui, par l'intermédiaire de son engrenage de transmission finale (40), commande un essieu (41) des roues (13),
ladite machine fournissant trois ensembles d'arbres pour la transmission du mouvement respectivement : du moteur endothermique (11) vers la prise de force (15), du moteur endothermique (11) vers la pompe hydrostatique (26) et du moteur hydrostatique (27) vers la réduction finale (40), de la réduction finale (40) vers l'axe de roue (41) et les roues elles-mêmes (13), dans laquelle lesdits ensembles d'arbres sont disposés sur des axes orthogonaux entre eux selon les directions principales (X, Y, Z) d'un espace euclidien tridimensionnel,
dans laquelle ledit arbre primaire (23) du moteur à combustion interne (11) et ledit arbre de la prise de force (22) sont disposés selon deux axes (X et X') disposés parallèlement l'un à l'autre, tandis qu'un axe (41) des roues (13) est disposé selon une direction Y qui est perpendiculaire auxdits axes (X, X') du moteur à combustion interne (11) et de l'arbre de la prise de force (22) ; et ledit axe de la pompe hydrostatique (26) est disposé selon une direction (Z') perpendiculaire à l'axe (X) de l'arbre primaire (23) et un arbre (54) en sortie du moteur hydrostatique (27) est disposé selon une direction (Z') qui est parallèle à l'axe (Z) de la pompe hydrostatique (26) et qui est perpendiculaire à l'axe (X) de l'arbre primaire (23).

2. Machine agricole selon la revendication 1, **caractérisée en ce que** dans ledit ensemble hydrostatique (25) au moins l'un parmi ladite pompe hydrostatique (26) et ledit moteur hydrostatique (27) est à déplacement variable, et ladite pompe hydrostatique (26) et ledit moteur hydrostatique (27) sont disposés en une unité compacte unique, ledit ensemble hydrostatique étant relié audit arbre primaire (23) de la boîte de vitesses (14).

3. Machine agricole selon la revendication 1 ou 2, **caractérisée en ce que** ladite pompe hydrostatique (26) et ledit moteur hydrostatique (27) dudit ensemble hydrostatique (25) sont disposés dans un carter monolithique (50a).

4. Machine agricole selon l'une des revendications 1, 2 ou 3, **caractérisée en ce que** ledit ensemble hydrostatique (25) est relié audit arbre primaire (23) de la boîte de vitesses (14) au moyen de ladite première chaîne cinématique qui comprend un premier engrenage conique (28) claveté sur ledit arbre primaire (23) qui commande à son tour un deuxième engrenage conique (29) qui entraîne la pompe hydrostatique (26).

5. Machine agricole selon la revendication 1, **caractérisée en ce que** ladite deuxième chaîne cinématique comprend un troisième engrenage (34) coaxial à l'arbre du moteur hydrostatique (27) qui entraîne à son tour la rotation d'un quatrième engrenage (36) qui renvoie le mouvement de rotation à l'intérieur de la boîte de vitesses (14).

6. Machine agricole selon l'une des revendications précédentes de 1 à 5, **caractérisée en ce qu'**elle comprend un boîtier (50) de la boîte de vitesses ou de la transmission pourvu d'ailettes (31) pour favoriser la dispersion thermique.

7. Machine agricole selon l'une des revendications précédentes de 1 à 6, **caractérisée en ce qu'**elle comprend en outre un ensemble de refroidissement (45, 46, 47) associé à l'ensemble hydrostatique.

8. Machine agricole selon la revendication 7, **caractérisée en ce que** ledit ensemble de refroidissement comprend un ventilateur (45) enfermé dans un carter d'embrayage (46), disposé au-dessus du ventilateur (45) de telle sorte qu'il dirige le flux d'air pour envelopper la totalité de l'ensemble hydrostatique.

9. Machine agricole selon la revendication 8, **caractérisée en ce que** ledit ventilateur centrifuge (45) a un encombrement général total en forme de cylindre dans lequel la surface latérale du cylindre est formée par des ailettes radiales fixées à une base circulaire, où lesdites ailettes sont disposées en palissade, s'étendent vers le haut à partir de la base et sont reliées uniquement à ladite base inférieure qui est clavetée sur un arbre d'entraînement.

10. Machine agricole selon la revendication 8 ou 9, **caractérisée en ce que** ledit carter (46) présente des trous centraux (47) dans la surface supérieure du carter, par lesquels entre l'air qui, centrifugé radialement, est dirigé pour circuler à l'intérieur le long du carter (46) dans son contour et est évacué à l'extérieur par l'intermédiaire d'une ouverture périphérique (46a).
